(19) Europäisches Patentamt
European Patent Office
Office européen des brevets

(11) **EP 3 651 345 B1**

(12) **FASCICULE DE BREVET EUROPEEN**

(45) Date de publication et mention
de la délivrance du brevet:
**05.07.2023 Bulletin 2023/27**

(21) Numéro de dépôt: **19205950.9**

(22) Date de dépôt: **29.10.2019**

(51) Classification Internationale des Brevets (IPC):
**H02P 5/747** *(2006.01)* **H02P 6/04** *(2016.01)*

(52) Classification Coopérative des Brevets (CPC):
**H02P 5/747; H02P 6/04**

(54) **PROCÉDÉ DE RÉDUCTION DU COUPLE DE CRANTAGE PRODUIT PAR DES MOTEURS ÉLECTRIQUES DE TYPE BRUSHLESS UTILISES SIMULATENEMENT**

REDUZIERUNGSVERFAHREN DES RASTMOMENTS, DAS VON GLEICHZEITIG VERWENDETEN BÜRSTENLOSEN ELEKTRISCHEN MOTOREN ERZEUGT WIRD

METHOD FOR REDUCING THE DETENT TORQUE PRODUCED BY BRUSHLESS TYPE ELECTRIC MOTORS USED SIMULTANEOUSLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2018 FR 1860391**

(43) Date de publication de la demande:
**13.05.2020 Bulletin 2020/20**

(73) Titulaire: **Circor Industria**
**94420 Le Plessis Trevise (FR)**

(72) Inventeur: **ABRAHAM, Sylvain**
**49100 ANGERS (FR)**

(74) Mandataire: **Duxbury, Stephen**
**Arnold & Siedsma**
**Bavariaring 17**
**80336 München (DE)**

(56) Documents cités:
**WO-A1-2007/137657    WO-A1-2018/008328**
**US-A1- 2005 067 913    US-A1- 2007 273 234**
**US-A1- 2008 030 163    US-A1- 2018 019 648**
**US-A1- 2018 020 923    US-A1- 2018 109 166**
**US-B1- 6 784 582**

## Description

La présente invention concerne un procédé de réduction du couple de crantage produit par des moteurs électriques de type brushless utilisés simultanément. Un tel couple de crantage est également nommé couple d'encochage ou, plus généralement, par le terme anglais « cogging ou par l'expression anglaise « cogging torque ». Pour faciliter la lecture, le terme « cogging » sera préférentiellement utilisé par la suite.

Un moteur électrique à aimants permanents sans balais est communément désigné par l'appellation « moteur brushless ». Un tel moteur comprend un rotor, composé d'au moins un aimant permanent, et un stator comportant plusieurs bobines générant un champ magnétique. Les bobines sont alimentées de façon séquentielle. De la sorte on génère un champ magnétique tournant à la même fréquence que les tensions d'alimentation. Le ou les aimant(s) permanent(s) du rotor cherche(nt) à chaque instant à s'orienter dans le sens du champ magnétique, ce qui induit le déplacement en rotation du rotor. Les tensions d'alimentation sont adaptées continuellement pour que le champ reste en avance sur la position du rotor, afin d'obtenir un couple moteur. Il est à noter qu'un moteur électrique assure la conversion d'une énergie électrique en énergie mécanique.

Certains moteurs brushless sont configurés avec le rotor positionné autour du stator. Cette configuration permet d'obtenir un couple moteur élevé avec une fréquence de rotation relativement faible.

D'autres types de moteur brushless, plus fréquents, ont une configuration miroir, à savoir un rotor inséré dans le stator. Dans ce cas, les vitesses de rotation sont plus élevées pour un couple plus faible, à taille de moteur équivalente. Des moteurs brushless du type rotor dans stator sont utilisés dans certains domaines où un couple doit être fourni sous un encombrement réduit, avec un fonctionnement sécurisé et continu. En effet, de nombreux systèmes hydrauliques sont ainsi remplacés par des systèmes électromécaniques, cela dans tous les domaines de l'industrie. On les rencontre notamment dans le domaine médical, spatial, aéronautique pour la mise en oeuvre d'actionneurs électromécaniques.

Dans ce contexte, il est de plus en plus fréquent d'utiliser, simultanément, au moins deux moteurs brushless pour actionner un même dispositif. Une telle configuration se rencontre, par exemple, pour des raisons de fiabilité, de maintenance, de sécurité ou encore pour des raisons de puissance sous un encombrement maitrisé.

Un tel couplage de moteurs se rencontre, par exemple, dans le domaine aéronautique et spatial où, pour essentiellement des raisons de sécurité, il y a redondance des dispositifs et des appareils. Lors d'un couplage de moteurs brushless, ces derniers, dont le nombre est supérieur ou égal à deux, agissent sur un même organe, généralement un arbre de rotation, une vis sans fin ou tout autre organe connu en soi.

Par la suite, pour faciliter la lecture, l'invention sera décrite avec des moteurs brushless avec le rotor inséré dans le stator, étant entendu que l'invention trouve son application également dans la configuration miroir, à savoir avec un rotor entourant le stator. Dans cette configuration, le stator forme un cylindre creux à base circulaire avec un volume central qui reçoit le rotor, également en forme de cylindre, plein, à base circulaire. Le rotor comprend un arbre d'entrainement d'un organe défini. Des cloisons radiales s'étendent dans le volume central du stator, en direction du rotor. Les cloisons définissent entre elles des volumes unitaires ou encoches. De facto, ces encoches entourent le rotor lorsque ce dernier est introduit dans le volume central du stator. Ainsi, en section radiale, le stator présente une forme d'étoile ou plus exactement de bague étoilée.

Le fonctionnement des moteurs brushless, quelle que soit leur configuration avec le rotor inséré ou entourant le stator, génère, un couple particulier, en l'espèce un couple d'encochage couramment désigné par le terme anglais de cogging. Selon une définition admise par la commission électrotechnique internationale (CEI) le couple dénommé par le terme de cogging est le couple cyclique d'un moteur électrique à aimant permanent résultant de la tendance du rotor et du stator à s'aligner dans une position correspondante à la réluctance magnétique minimale.

En d'autres termes, il s'agit du phénomène de résistance à la rotation, de type pas à pas ou encochage, observé lorsque le rotor tourne par rapport au stator, cela dans tout type de moteurs électriques. En effet, lorsque les aimants se retrouvent face à une partie métallique saillante, la liaison magnétique entre les aimants du rotor et du stator n'est plus constante. Il en résulte une répulsion ou une attraction entre le rotor et le stator.

Dans certains domaines, un tel phénomène peut induire au minimum une gêne pour l'utilisateur d'un appareil ou dispositif mis en oeuvre par un tel moteur. Tel est le cas, à titre d'exemple non limitatif, dans le domaine aéronautique où des moteurs électriques à aimants permanents assurent la manoeuvre des commandes de vol. Toute gêne ou résistance dans la manipulation d'une commande de vol ressentie par le pilote peut affecter le pilotage de l'aéronef. En d'autres termes, il convient de préserver une manoeuvrabilité fluide et continue, sans résistance, des commandes de vol, étant entendu que toute résistance peut être interprétée par le pilote comme un problème sur un organe de vol. Or, lorsqu'au moins deux moteurs de ce type sont utilisés simultanément pour actionner une même commande, ce qui est fréquent dans le domaine aéronautique pour la manouvre d'organes aussi sensibles et vitaux que les commandes de vol, le phénomène de cogging s'en trouve amplifié, chaque moteur générant un couple de cogging.

Afin de remédier à ce phénomène de cogging l'une des solutions connues et fréquemment utilisées consiste à réaliser une continuité, ou une quasi continuité, de matière ferromagnétique faisant face aux aimants, d'où une annulation, ou du moins une diminution, de la résistance à la rotation du rotor. On connait aussi, par exemple, par US-A-2018020923, US-A-2018019648, US-A-6784582, US-A-2005067913, US-A-2007273234, WO-A-2018008328 des solutions avec des encoches du rotor fermées et/ou de formes plus ou moins complexes, et/ou des parois de formes complexes et/ou des cloisons du stator positionnées en décalé par rapport aux pôles des aimants. Ces solutions visent à diminuer autant que possible le cogging. On connait également par US-A-2018/109166 des machines électriques comportant des ensembles de disques avec des aimants montés coaxialement autour d'un arbre de rotation. Des modules d'interface et de contrôle permettent de réguler le fonctionnement des ensembles et donc de jouer sur le cogging. Une telle solution est complexe et pour un domaine technique très spécifique, donc inadaptable à des moteurs électriques existants.

Plus généralement, toutes les solutions connues visent à modifier structurellement un moteur brushless. De fait, lorsque plusieurs moteurs brushless sont utilisés, cela induit que l'on utilise des moteurs modifiés, donc des moteurs non disponibles parmi le moteurs standardisés du commerce, d'où un surcout. Par ailleurs, les solutions connues diminuent l'effet cogging, or l'effet résiduel est d'autant plus élevé que le nombre de moteurs présents est élevé. De plus, les solutions connues affectent les performances des moteurs.

C'est à ces inconvénients qu'entend plus particulièrement remédier l'invention en proposant un procédé de réduction du couple d'encochage produit par des moteurs électriques de type brushless utilisés simultanément, d'une mise en oeuvre aisée et simple tout en n'affectant pas la structure des moteurs.

A cet effet, l'invention a pour objet un procédé de réduction du couple d'encochage ou cogging produit par au moins deux moteurs électriques de type brushless utilisés simultanément, selon la revendication 1.

Dans ce cas, les couples de cogging de chaque moteur s'opposent et donc s'annulent ou, pour le moins, la résultante des couples de cogging de chaque moteur est très diminuée. Une telle solution n'affecte pas la structure interne des moteurs, ceux-ci pouvant par ailleurs être initialement en place. Cette solution s'applique autant à des moteurs neufs qu'existants et ne nécessite pas la mise en oeuvre d'organes supplémentaires. Il n'y a donc aucune modification de l'encombrement initial et/ou de l'implantation des moteurs.

Selon des aspects avantageux mais non obligatoires de l'invention, un tel procédé peut comprendre une ou plusieurs des étapes suivantes:

- lors de l'étape a), la période T est déterminée par la relation T=360°/Na, avec Na=Np x Ns (PGCD Np, Ns), Na étant le nombre d'alignement de chaque pôle magnétique Np du rotor avec chaque volume de réception Ns du stator.
- Lors de l'étape b), le déphasage est obtenu par décalage des dents de l'engrenage de l'arbre de sortie des moteurs l'un par rapport à l'autre.
- Le nombre de moteurs en opposition de phase est pair.
- Ledit procédé est associé à une autre solution de réduction de couple de cogging.

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence aux dessins suivants dans lesquels:

- La figure 1 est une vue schématique du montage de deux moteurs brushless sur un même organe, conformément à un mode de réalisation de l'invention,
- la figure 2 est une courbe simplifiée, à une autre échelle, illustrant la mise en oeuvre du procédé selon un mode de réalisation de l'invention appliquée aux moteurs de la figure 1 et
- les figures 3A et 3B sont des schémas simplifiés illustrant, respectivement, l'absence et la présence d'un couple de cogging.

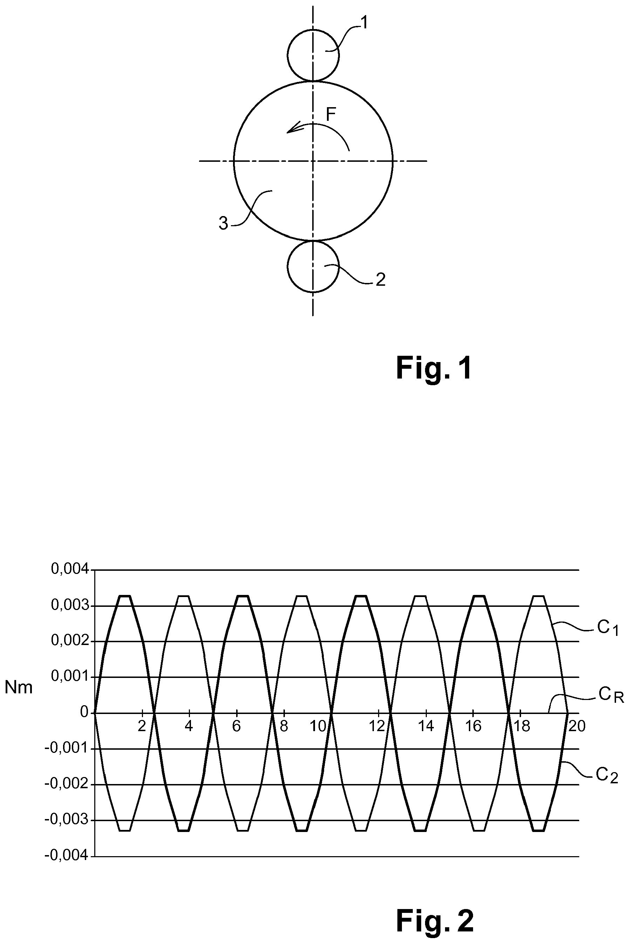

La figure 1 illustre, schématiquement, un exemple d'utilisation simultanée de deux moteurs brushless 1, 2. Chaque moteur 1, 2 est en prise, ici directe, par son rotor avec un arbre de rotation 3 ou un engrenage d'un appareil connu en soi. Selon un mode de réalisation avantageux, les moteurs 1, 2 sont identiques. En variante, ils ne sont pas identiques. Le nombre de moteurs brushless peut être supérieur à deux, par exemple de quatre, six ou plus, pour autant que, dans le cadre de l'invention, le nombre de moteurs soit pair. De même, les moteurs 1, 2 peuvent être disposés comme illustrés ou en série, donc l'un derrière l'autre sur l'arbre 3.

Concernant la position relative des moteurs par rapport à l'arbre de rotation, il en est de même avec un nombre de moteurs supérieur à deux. Dans tous les cas, on conçoit que le sens de rotation, ici représenté par la flèche F, est identique pour tous les moteurs, cela en considérant que le sens de rotation des moteurs peut être inversé.

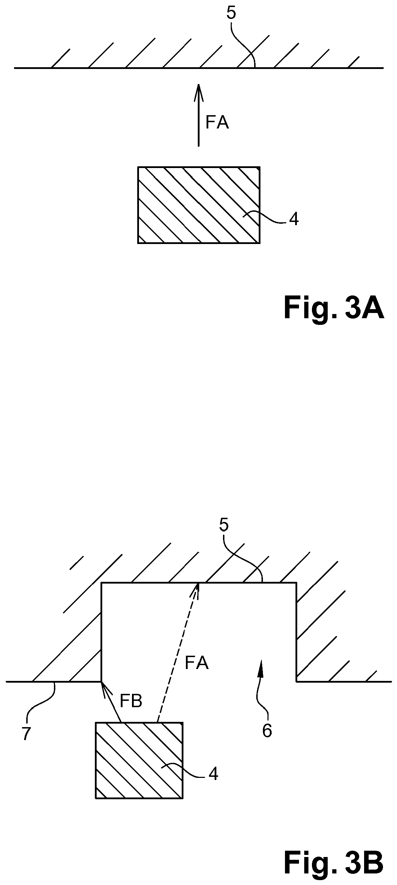

Chaque moteur 1, 2 génère un couple de cogging. Comme cela ressort des figures 3A et 3B, l'effet cogging se produit chaque fois qu'un pôle magnétique, nord ou sud, du rotor se trouve face à une saillance du matériau ferromagnétique du stator, que le rotor soit inséré ou entoure le stator. Il convient de garder à l'esprit que le champ électromagnétique se propage en suivant le chemin où la distance à effectuer dans l'air, qui est un isolant électromagnétique, est la plus faible possible.

A la figure 3A, un aimant 4 du rotor est positionné en face d'une partie métallique 5 sans saillance constitutive du stator. Dans ce cas, la force d'attraction, selon la flèche FA, de l'aimant 4 sur la partie métallique 5 est constante et sans à-coups, cela quel que l'angle de rotation du rotor. A la figure 3B, l'aimant 4 est face à une saillance 7 du fait de la présence d'une encoche 6. Dans ce cas, la force d'attraction, selon la flèche FA, de l'aimant 4 sur la partie métallique 5 n'est plus constante et présente des à-coups, cela quel que l'angle de rotation du rotor. En effet, comme indiqué précédemment, le champ électromagnétique se propage en suivant le chemin où la distance à effectuer dans l'air est la plus faible possible, donc ici en suivant la flèche FB.

Comme cela ressort de la figure 2, chaque moteur 1, 2 a un couple de cogging C1, C2 d'une période T donnée. Selon l'invention, si les périodes T des couples de cogging C1, C2 des moteurs 1, 2, exprimés en Newton en fonction de la position angulaire du rotor, sont en opposition de phase on observe un couple résultant Cr qui est nul.

Pour un moteur 1, 2 donné, on conçoit que, lors d'un tour complet du rotor, chaque pôle magnétique des aimants du rotor se trouve aligné une fois avec chaque partie ferromagnétique ménagée sur le stator et matérialisée par les encoches. En d'autres termes, la connaissance, pour chaque moteur, du nombre d'alignements Na par rotation, donc par révolution complète du rotor, permet de caractériser le couple de cogging.

Ainsi, selon le nombre de pôles magnétiques Np et selon le nombre d'encoches Ns, on peut définir pour chaque moteur un nombre d'alignements par tour Na. Il convient de tenir compte du fait que plusieurs pôles peuvent, simultanément, se trouver aligner avec une encoche. Dans ce cas, le nombre d'alignements par tour Na est donné par la relation :

$$Na = Np \times Ns / PGCD (Ns ; Np)$$

avec :

  Np : nombre de pôles ;
  Ns : nombre d'encoches ;
  PGCD : Plus Grand Commun Diviseur entre Ns et Np.

A partir de ce nombre d'alignements Na, on peut alors définir pour chaque moteur 1, 2 une période T du couple de cogging par la relation:

$$T = 360 / Na$$

Ainsi, chaque moteur 1, 2 a un couple de cogging d'une période T déterminée par la relation précédemment définie.

Selon l'invention, si les périodes T des couples de cogging des moteurs 1, 2 sont décalées d'une valeur donnée, en l'espèce, lorsque l'on a deux moteurs, d'une valeur de déphasage D égale à une demi période, soit D = T/2, alors, pour des moteurs 1, 2 identiques, on obtient des valeurs de couples de cogging qui s'opposent. On conçoit qu'avec un nombre de moteurs supérieur à deux mais pair, la valeur de déphase est adaptée au profil du cogging. En effet, la courbe de cogging n'est pas une sinusoïde parfaite. Par ailleurs, les profils de cogging peuvent être différents entre les moteurs si ces derniers ne sont pas identiques bien qu'ayant une période identique.

Il est donc aisé, grâce à l'invention, lorsque l'on dispose de deux, ou d'un nombre pair supérieur à deux, de moteurs brushless identiques, ou du moins avec une période T identique lorsque les moteurs ne sont pas les mêmes, de réduire voire supprimer l'effet de cogging.

L'invention trouve ainsi son application tant sur des montages avec des moteurs neufs que sur des montages existants. De plus, aucune modification structurelle des moteurs n'est nécessaire, si ce n'est en optimisant, pour chaque moteur, le positionnement du rotor par rapport à l'arbre de rotation.

Le déphasage est réalisé pour chaque moteur, par exemple, en indexant les dents de l'engrenage du rotor par rapport à un point fixe donné du stator pour les moteurs 1, 2. Ainsi, par un réglage uniquement mécanique, sans aucun ajout d'organe, sans modification de l'encombrement et/ou de l'emplacement des moteurs, on assure l'annulation du cogging, cela de manière définitive pour le montage de moteurs concernés.

On conçoit que selon les moteurs les couples de cogging sont plus ou moins importants et donc, de facto, que le déphasage à réaliser doit être plus ou moins important. A cet effet, il est possible, mais non obligatoire, de coupler l'invention avec une autre solution technique permettant de minimiser autant que possible l'effet cogging.

**Revendications**

1.  Procédé de réduction du couple d'encochage ou cogging (C1, C2) produit par au moins deux moteurs électriques de type brushless (1, 2) utilisés simultanément, lesdits moteurs (1, 2) comprenant un rotor, relié à un arbre de sortie et composé d'au moins un aimant permanent, et un stator comportant au moins deux volumes de réception d'au moins trois bobines générant un champ magnétique, **caractérisé en ce qu'**il comprend au moins les étapes suivantes :

    - a) déterminer pour chaque moteur (1, 2) la période T du couple de cogging, ladite période T du couple de cogging étant identique pour lesdits moteurs,
    - b) mettre en opposition de phase les périodes T de chaque moteur (1, 2) déterminées à l'étape a), ladite opposition de phase étant réalisée en déphasant les périodes T de chaque moteur d'une valeur de (T/2) °.

2.  Procédé selon la revendication 1, **caractérisé en ce**

**que** lors de l'étape a), la période T est déterminée par la relation T=360°/Na, avec Na=Np x Ns (PGCD Np, Ns), Na étant le nombre d'alignement de chaque pole magnétique Np du rotor avec chaque volume de réception Ns du stator.

3. Procédé selon la revendication 1, **caractérisé en ce que** lors de l'étape b), le déphasage est obtenu par décalage des dents de l'engrenage de l'arbre de sortie des moteurs l'un par rapport à l'autre.

4. Procédé selon la revendication 1, **caractérisé en ce que** le nombre de moteurs en opposition de phase est pair.

5. Procédé selon la revendication 1, **caractérisé en ce que** ledit procédé est associé à une autre solution de réduction de couple de cogging (C1, C2).

**Patentansprüche**

1. Verfahren zum Reduzieren einer Polfühligkeit bzw. eines Rastmoments (C1, C2), die bzw. das von mindestens zwei gleichzeitig verwendeten bürstenlosen Elektromotoren (1, 2) erzeugt wird, wobei die Motoren (1, 2) einen Rotor, der mit einer Ausgangswelle verbunden ist und aus mindestens einem Permanentmagneten besteht, und einen Stator umfassen, der mindestens zwei Aufnahmevolumina von mindestens drei Spulen umfasst, die ein Magnetfeld erzeugen, **dadurch gekennzeichnet, dass** das Verfahren mindestens die folgenden Schritte umfasst:

- a) Bestimmen der Periode T des Rastmoments für jeden Motor (1, 2), wobei die Periode T des Rastmoments für die Motoren identisch ist,
- b) Versetzen der in Schritt a) bestimmten Perioden T jedes Motors (1, 2) in Gegenphase, wobei die Gegenphase durch Verschieben der Perioden T jedes Motors um einen Wert von (T/2)° erreicht wird.

2. Verfahren nach Anspruch 1, **dadurch gekennzeichnet, dass** während Schritt a) die Periode T durch die Beziehung T = 360°/Na bestimmt wird, wobei Na = Np x Ns (ggT Np, Ns), wobei Na die Anzahl der Ausrichtungen jedes Magnetpols Np des Rotors mit jedem Aufnahmevolumen Ns des Stators ist.

3. Verfahren nach Anspruch 1, **dadurch gekennzeichnet, dass** während Schritt b) die Phasenverschiebung erhalten wird, indem die Zähne des Zahnrads der Ausgangswelle der Motoren gegeneinander versetzt werden.

4. Verfahren nach Anspruch 1, **dadurch gekennzeichnet, daß** die Anzahl der gegenphasigen Motoren gerade ist.

5. Verfahren nach Anspruch 1, **dadurch gekennzeichnet, dass** das Verfahren mit einer anderen Lösung zur Reduzierung des Rastmoments (C1, C2) verbunden ist.

**Claims**

1. A method for reducing a cogging torque (C1, C2) produced by at least two brushless electric motors (1, 2) used simultaneously, wherein the motors (1, 2) comprise a rotor connected to an output shaft and made of at least one permanent magnet, and a stator comprising at least two receiving volumes for at least three coils generating a magnetic field, **characterised in that** the method comprises at least the following steps:

- a) determining the period T of the cogging torque for each motor (1, 2), said period T of the cogging torque being identical for said motors,
- b) bringing the periods T of each motor (1, 2) as determined in step a) into phase opposition, said phase opposition being achieved by phase shifting the periods T of each motor by a value of (T/2) °.

2. The method according to claim 1, **characterised in that** during step a), the period T is determined by the relationship T=360°/Na, where Na=Np x Ns (GCD Np, Ns), Na being the number of alignments of each magnetic pole Np of the rotor with each receiving volume Ns of the stator.

3. The method according to claim 1, **characterised in that** during step b), phase shifting is obtained by offsetting the gear teeth of the output shaft of the motors relative to each other.

4. The method according to claim 1, **characterised in that** the number of motors in phase opposition is even.

5. The method according to claim 1, **characterised in that** said method is associated with another solution for reducing the cogging torque (C1, C2).

**Fig. 1**

**Fig. 2**

5

FA

4

**Fig. 3A**

5

FA

7

FB

6

4

**Fig. 3B**

**EP 3 651 345 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018020923 A
- US 2018019648 A
- US 6784582 A
- US 2005067913 A
- US 2007273234 A
- WO 2018008328 A
- US 2018109166 A